# EUROPÄISCHE PATENTANMELDUNG

(11) **EP 1 922 911 A1**
(43) Veröffentlichungstag der Anmeldung: **21.05.2008**
(21) Anmeldenummer: 07022191.6
(22) Anmeldetag: 15.11.2007
(51) Int. Cl.: A01B 27/00, A01B 29/06, A01B 29/04

(54) **Vorrichtung zum Bodenbearbeiten bzw. Zerkleinern von Erdbrocken sowie Gluten**

(30) Priorität: 17.11.2006 DE 202006017664 U; 30.04.2007 DE 202007006173 U
(71) Anmelder: Hendlmeier, Konrad, 93107 Thalmassing / Untersanding (DE)
(72) Erfinder: Hendlmeier, Konrad, 93107 Thalmassing / Untersanding (DE)
(74) Vertreter: Wasmeier, Alfons

(57) **Zusammenfassung**

Vorrichtung zum Bodenbearbeiten bzw. Zerkleinern von Erdbrocken sowie Gluten und dergl. pflanzlichen Rückständen, mit einem Maschinenrahmen (1), einer Mehrzahl von um eine horizontale Achse rotierenden, voneinander beabstandeten und nebeneinander axial befestigten Ringelementen mit Walzenring und speichenartigen Elementen (7), sowie zwischen den Ringelementen angeordneten, zum Boden gerichteten Zerkleinerungselementen (4).

## Beschreibung

Die Erfindung betrifft eine Vorrichtung nach dem Oberbegriff des Anspruches 1.

Aufgabe der Erfindung ist, bei einer gattungsgemäßen Vorrichtung die Zerkleinerung von Glutenzusammenballungen und Erdbrocken zu verbessern und damit einerseits die Gluten und sonstigen pflanzlichen Restbestandteile unschädlich zu machen und andererseits größere Erdbrocken in krümeliges Erdreich zu verformen.

Gemäß der Erfindung wird dies mit den Merkmalen des Kennzeichens des Anspruches 1 erreicht. Weitere Merkmale der Erfindung sind Gegenstand der Unteransprüche.

Die in Form von Brech- oder Anstauplatten ausgebildeten Zerkleinerungselemente, die am Maschinenrahmen, z.B. über einen Träger fest, jedoch in der Regel auslenkbar, aber insgesamt feststehend (nicht rotierend) angeordnet sind, kommen im Betrieb mit den umlaufenden speichenartigen Elementen, z.B. Speichen von Walzenringen, Federstempelwalzen, oder dergl., die auf der Vorrichtungsachse rotierend angeordnet sind, in Eingriff. Durch die dabei entstehende Relativdrehung werden die Erdreich- und Glutenbrocken jeweils zwischen einem speichenartigen Element und einer Brechplatte angestaut und im Spalt zwischen beiden teils fräsend, teils schneidend und teils drückend zerkleinert und aufgelöst. Die einander zugewandten Arbeitsflächen der speichenartigen Elemente und der Brechplatten sind dabei vorzugsweise mit ausgeprägten Kanten oder Schneiden versehen, so dass dieser Fräs- und/oder Schneidvorgang effektiv ausgeführt werden kann. Da diese Kanten einer relativ hohen Abnutzung unterliegen, sind die Brechplatten im bodennahen Bereich auswechselbar ausgebildet, damit bei auftretenden Abnutzungserscheinungen die Brechplatten ersetzt werden können. Entsprechend können die Wirkflächen der speichenartigen Elemente mit Belägen oder Auflagen versehen sein, die ebenfalls austauschbar sind.

Die Brechplatten sind vorzugsweise Flacheisen- oder Flachfederstahl-Elemente mit in Fahrtrichtung gesehen größerer Breite und geringer Dicke, die wenn sie aus Flacheisen bestehen, selbst im wesentlichen biegesteif und auslenkbar gelagert sind oder, wenn sie aus Federstahl oder entsprechendem elastisch nachgiebigem Material bestehen, rückstellbar und elastisch nachgiebig sind, und damit bei hoher Beanspruchung im Arbeitsbereich bzw. Eingriffsbereich von Erdbrocken die Beanspruchung kompensieren können.

Die Speichenelemente von Walzenringen, Federstempelwalzen oder dergl., die mit den Brechplatten zusammenwirken und einander zugeordnet arbeiten, sind wahlweise von herkömmlicher Ausführung und unterliegen somit ebenfalls einer relativ hohen Abnutzung. Da das Auswechseln von Speichenelementen nicht ohne weiteres möglich ist, werden z.B. die Speichen seitlich, d.h. den Seitenbegrenzungen der Brechplatten zugewandt, mit an die Speichenelemente angeschraubten oder angeschweißten Aufträgen, z.B. plattenförmigen Streifenelemente oder die Speichen ganz oder teilweise umschließenden Muffen, Hülsen oder dergl. versehen, die bei Abnutzung ausgewechselt werden können. Zusätzlich können die auf der den Brechplatten zugewandten Seite vorgesehenen Aufträge kantig oder schneidenartig ausgeführt sein, damit im Einsatz auf dem Feld die Erdreich- und Glutenbrocken, die einen größeren Durchmesser haben als der Abstand zwischen den Speichen und den Brechplatten, durch Fräs- und/oder Schneidwirkung besonders effektiv zerkleinert werden.

Die Brechplatten sind direkt oder über einen Zwischenträger mit dem Rahmen der Vorrichtung verbunden, z.B. über Flachfedern auslenkbar, wenn Steine zwischen den Erd- und Glutenbrocken am Spalt zwischen speichenartigem Element und Brechplatte auftreten, so dass der Effekt einer Steinsicherung erreicht wird.

Der Abstand zwischen den speicherartigen Elementen und den Brechplatten auf der durchgehenden Achse kann entsprechend der Bodenbeschaffenheit in Achsrichtung einstellbar ausgeführt sein. Auch kann der bodennahe Abschnitt der Brechplatte am mit dem Rahmen fest verbundenen Träger klappbar ausgebildet sein, damit bei Rückwärtsfahrt dieser Abschnitt der Brechplatte umgeklappt und ausgelenkt werden kann. Bei Arbeitsfahrt hingegen ist die Klappvorrichtung gesperrt.

Die beigefügten Figuren zeigen:
- Fig. 1: eine schematische Darstellung der Erfindung in Verbindung mit einer Federstempelwalze in seitlicher Ansicht,
- Fig. 2: schematisch eine Ansicht der speicherartigen Elemente und der Brechplatten mit der gemeinsamen umlaufenden Achse von vorne,
- Fig. 3: eine abgeänderte Ausführungsform der Brechplatten, und
- Fig. 4: Darstellungen von Profilformen an den Speichen und Brechplatten.

Am Rahmen 1 einer Bodenbearbeitungsmaschine sind Träger 2 befestigt, die über eine lösbare Verbindung, z.B. eine Schraubverbindung 3 am bodennahen Ende Brechplatten 4 aufweisen. Dabei ist jeweils eine Anordnung aus Träger 2, Verbindung 3 und Brechplatte 4 zwischen zwei benachbarten Federstempelwalzenelementen 5 angeordnet, so dass in Richtung der Achse 6 jeweils ein Federstempelelement 5 mit einer Brechplatte 4 abwechselt. Der Abstand zwischen Brechplatte 4 und Speiche 5 ist so gewählt, dass der seitliche Abstand zwischen beiden kleiner ist als der mittlere Durchmesser der Brocken, so dass im Einsatz durch das Zusammenwirken der Speichen 7 und der Brechplatten 4 der Brocken B zwangsweise durch den gebildeten Spalt hindurchgeführt und dabei zerkrümelt oder zerkleinert wird. Dieser Zerkleinerungsvorgang entspricht einem Schneid- oder Fräsvorgang, der teilweise auch durch Abrieb eintritt. Der Abstand der einander zugewandten Speichen- und Brechplattenseiten ist vorzugsweise je nach Maschinenkonstruktion verstellbar, damit eine Anpassung an die Bodenverhältnisse möglich ist.

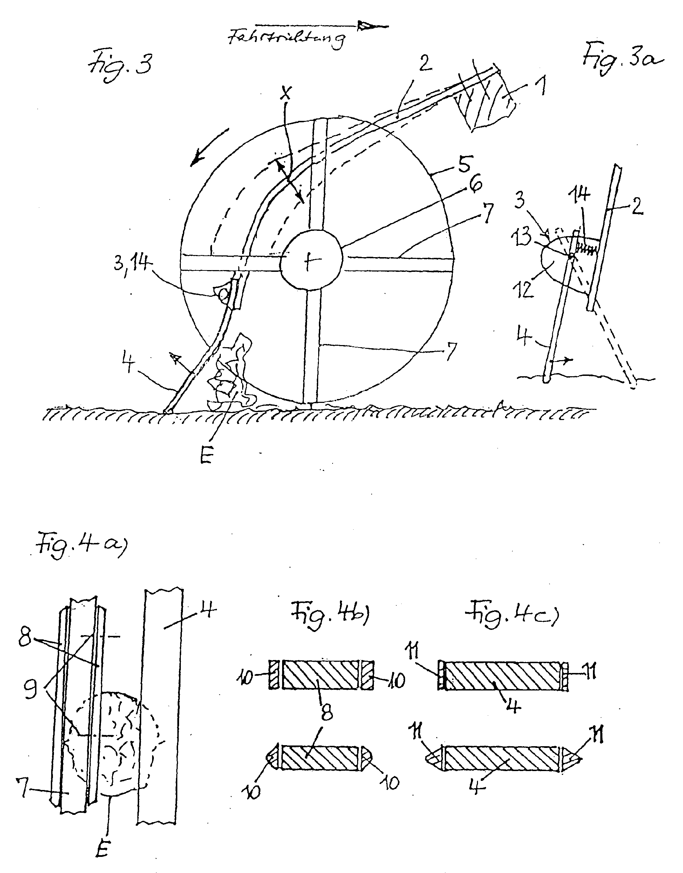

Um den Zerkleinerungs- bzw. Zerkrümelungseffekt, der zwischen den miteinander abwechselnden Speichen 7 und Brechplatten 4 während des Einsatzes aufgrund der Relativbewegung zwischen beiden erreicht wird, zu verbessern, werden an den Seitenwänden der Speichen 7 Streifenelemente 8 befestigt, wie mit 9 schematisch angedeutet, die auswechselbar mit den Speichen verbunden oder auf die Speichen seitlich aufgeschweisst sind, so dass bei Abnutzung der Streifenelemente ein Austausch möglich ist. Diese Streifenelemente können seitlich scharfe Eckkanten oder Schneidkanten oder entsprechende Profile 10 aufweisen, die mit entsprechenden ähnlichen Profilen 10 an den schmalen Seitenwänden der Brechplatten 4 zusammenwirken, um die Effektivität der Zerkrümelung bzw. des Zerteilens oder Brechens der Gluten zu erzielen, wie dies in Fig. 4 schematisch dargestellt ist.

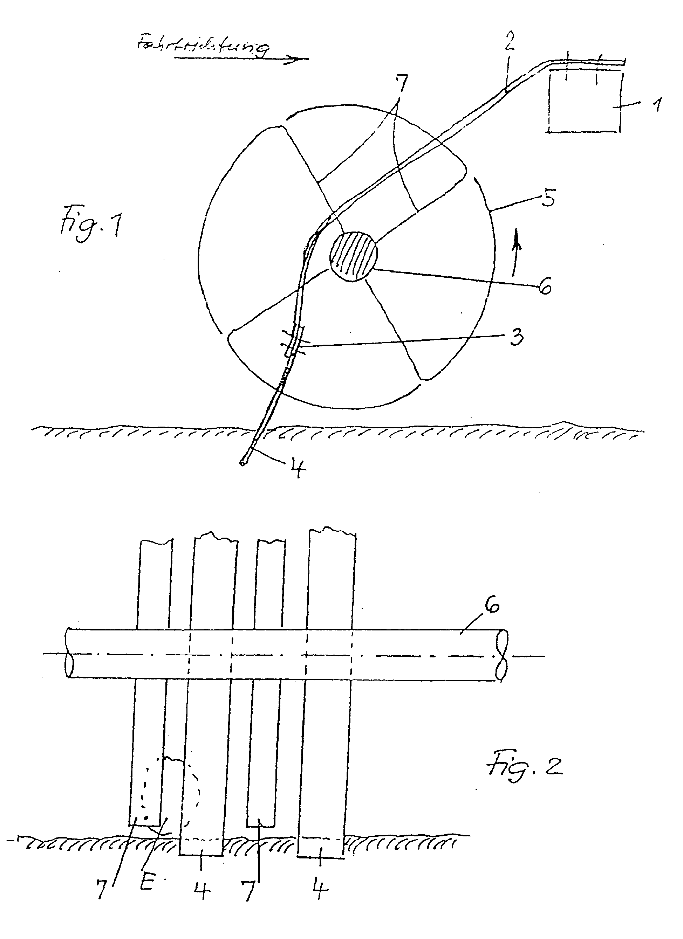

Die die Brechplatten 4 aufnehmenden Träger 2 sind oberhalb der Achse 6 der Walze 5 angeordnet. Der Träger 2 kann starr oder elastisch nachgiebig ausgebildet sein. Die Brechplatten 4 können wahlweise mit dem Träger 2 integriert, d.h. einteilig ausgebildet sein oder wie in Fig. 1 dargestellt, zum möglichen Austausch bei Abnutzung mittels lösbarer Verbindung 3 ausgelegt sein, wobei die Brechplatten 4 in der Regel aus starrem Material, z.B. aus Stahl oder hochwertigem Eisen bestehen. Die Brechplatten 4 sind für einen einwandfreien Betrieb steil angestellt angeordnet, damit die zu zerkleinernden Brocken durch die Brechplatten 4 im Einsatz gegen den Boden gedrückt werden, gleichzeitig aber das in das Erdreich reichende Ende der Brechplatten zur Bodenbearbeitung beitragen kann.

Die Darstellung nach Fig. 3 und 3a zeigt an der Verbindungsstelle zwischen Träger 2 und Brechplatte 4 eine Verbindungsvorrichtung 3, die aus einem am unteren Ende des Trägers 2 angeordneten Lagerbock 12 und einer in diesem Lagerbock 12 drehbar gelagert angeordneten Lagerachse 13 besteht, wobei die Lagerachse 13 die Lagerstelle für die Brechplatte 4 darstellt. Mit einer derartigen Vorrichtung kann die Brechplatte 4 in Pfeilrichtung nach vorne ausgelenkt werden, wenn die Walze 5 rückwärts bewegt werden soll, da ohne eine solche Auslenkung eine Bewegung nach hinten dazu führt, dass die Brechplatte sich im Boden sperrt. Eine solche Auslenkung der Brechplatte 4 nach vorne wird bei Vorwärtsfahrt dadurch unterbunden, dass die Brechplatte 4 durch eine entsprechende mechanische oder hydraulische, elastisch nachgiebige Sperre 14 in der Arbeitsposition gehalten wird, solange eine Vorspannung in der Sperre nicht überwunden wird. In Fig. 3 ist des weiteren der Träger 2 ausgehend von der Befestigung an dem Rahmengestell 1 auslenkbar ausgebildet. Die Auslenkstrecke ist mit x dargestellt.

### Bezugszeichenliste

- 1: Maschinenrahmen
- 2: Träger
- 3: Verbindung, z.B. Schraubverbindung
- 4: Brechplatte
- 5: Federstempelwalze
- 6: Achse
- 7: Speichen
- 8: Streifenelemente
- 9: Befestigung
- 10: Streifenprofil
- 11: Brechplattenprofil
- 12: Lagerbock
- 13: Lagerachse
- 14: elastisch nachgiebige Sperre

## Patentansprüche

1. Vorrichtung zum Bodenbearbeiten bzw. Zerkleinern von Erdbrocken sowie Gluten und dergl. pflanzlichen Rückständen, mit einem Maschinenrahmen, einer Mehrzahl von um eine horizontale Achse rotierenden, voneinander beabstandeten und nebeneinander axial befestigten Ringelementen mit Walzenring und speichenartigen Elementen, sowie zwischen den Ringelementen angeordneten, zum Boden gerichteten Zerkleinerungselementen, **dadurch gekennzeichnet,**
**dass** die Zerkleinerungselemente als Brechplatten bzw. Anstauplatten (4) in Form von Flachmaterial ausgebildet sind, die jeweils zwischen einseitig oder beidseitig angeordneten speichenartigen Elementen (7) vorgesehen sind,
**dass** der Abstand zwischen den speichenartigen Elementen und den Brechplatten bzw. Zerkleinerungsplatten in Richtung der horizontalen Achse entsprechend dem größten, noch durchzulassenden Durchmesser eines Erdbrockens (6) oder Glutenbrockens entsprechend ausgelegt ist, und
**dass** die den speichenartigen Elementen zugewandten Flächen der Brechplatten mit seitlichen Profilen (10, 11), z.B. Kanten oder Schneiden versehen sind.

2. Vorrichtung nach Anspruch 1, **dadurch gekennzeichnet, dass** die Breitenabmessung der Brechplatten(4) in Richtung der horizontalen Achse erheblich größer ist als die Dickenabmessung rechtwinklig dazu.

3. Vorrichtung nach Anspruch 1 oder 2, **dadurch gekennzeichnet, dass** die Brechplatten (4) oberhalb der horizontalen, die Ringelemente (5) tragenden Achse (6) mit dem Maschinenrahmen (1) starr verbunden, im Bereich der horizontalen Achse im steilen Winkel bogenförmig nach unten geführt und am unteren Ende mit dem Erdreich in Eingriff stend ausgebildet sind.

4. Vorrichtung nach einem der Ansprüche 1 - 3, **dadurch gekennzeichnet, dass** die Brechplatten (4) am Rahmen (1) oder mit dem Rahmen starr verbundenen Trägern (2) federnd nachgiebig in Fahrtrichtung und höhenauslenkbar angeordnet sind.

5. Vorrichtung nach einem der Ansprüche 1 - 4, **dadurch gekennzeichnet, dass** der aktive Abschnitt der Brechplatte (4) im bodennahen Bereich auswechselbar am Träger (2) befestigt ist.

6. Vorrichtung nach einem der Ansprüche 1 - 3, **dadurch gekennzeichnet, dass** die umlaufenden speichenartigen Elemente (7) und die feststehenden Brechplatten (4) in einem Staubereich zwischen den einander zugewandten und eine Relativdrehung zueinander ausführenden Seitenbegrenzungen miteinander teils fräsend, teils schneidend zusammenwirken und dabei die Erdbrocken und die Glutenbrocken zerkleinern und auflösen.

7. Vorrichtung nach einem der Ansprüche 1 - 6, **dadurch gekennzeichnet, dass** die einander zugewandten aktiven Arbeitsflächen von speichenartigen Elementen (7) und Brechplatten (4) ausgeprägte Profile (10, 11), z.B. in Form von Kanten oder Schneiden aufweisen.

8. Vorrichtung nach einem der Ansprüche 1 - 7, **dadurch gekennzeichnet, dass** der bodennahe Bereich der Brechplatten in Fahrtrichtung auslenkbar (12, 13) und gegen Fahrtrichtung gesperrt (14) am Träger (2) angeordnet ist.

9. Vorrichtung nach einem der Ansprüche 1 - 8, **dadurch gekennzeichnet, dass** die Brechplatten (4) oder die sie aufnehmenden Träger (2) an Flachfedern auslenkbar, z.B. als Steinsicherung, angeordnet sind.

10. Vorrichtung nach einem der Ansprüche 1 - 9, **dadurch gekennzeichnet, dass** die Brech- bzw. Anstauplatten schiffsbugartig ausgebildet sind.
